# EUROPEAN PATENT APPLICATION

(11) **EP 0 995 640 A2**
(43) Date of publication of application: **26.04.2000**
(21) Application number: 99307869.0
(22) Date of filing: 06.10.1999
(51) Int. Cl.: B60R 21/04

(54) **A vehicle panel**

(30) Priority: 21.10.1998 GB 9822986
(71) Applicant: ROVER GROUP LIMITED, Warwick, Warwickshire CV34 6RG (GB)
(72) Inventor: Monaghan, Michael Thomas, Hall Green, Birmingham B28 8EH (GB)
(74) Representative: Moffat, John Andrew

(57) **Abstract**

A vehicle panel (1) in which a curved member (2) is arranged to define a concave surface (3) from which extend major fins (4) and subsidiary fins (5), these major fins (4) and subsidiary fins (5) being interleaved. The major fins (4) have a tongue configuration extending from the curved surface (3) such that there is a gap either side with two opposed edges (9,10) of the curved member (2) in order to facilitate deformation particularly under perpendicular presentations of impact load to the vehicle panel (1). The subsidiary fins (5) only extend partially into the curved surface (3) in order to limit the degree of reinforcement provided by the subsidiary fins (5) which extend directly from one of the opposed edges (9). In such circumstances, the major fins (4) and the subsidiary fins (5) act in concert in order to allow appropriate energy absorption over a wide range of impact load angular presentations to the vehicle panel (1).

## Description

The present invention relates to a vehicle panel and more particularly to such a panel used for impact energy absorption in contact with an occupant of the vehicle during a vehicle collision.

Clearly, within a motor vehicle it is necessary to ensure the occupants of that vehicle are as safe as possible particularly during motor vehicle accidents. Furthermore, a motor vehicle inherently includes relatively hard surfaces which can cause severe injury to an occupant during a violent impact collision. In such circumstances, it will be appreciated that motor vehicle manufacturers incorporate within their vehicles a wide of range of arrangements and devices in order to protect vehicle occupants.

With regard to vehicle panels it is known to provide deformable fins behind the viewed surface of that panel such that the fins deform upon impact in order to absorb energy. An example of such a vehicle panel arrangement is illustrated in United States Patent number 5,709,407 (Chrysler Corporation). Such vehicle panels typically have fins which extend across the panel and from at least one edge such that the fins will deform under impact load progressively and most sympathetically for occupant protection.

Unfortunately, such previous vehicle panels with fins for impact energy dissipation are reasonably effective for impact loads applied substantially perpendicularly to the panel but can provide differential and even reinforcement of the panel at more angular presentations of impact load. Clearly, such a response from the vehicle panel during an impact can be detrimental to a vehicle occupant and therefore may be unacceptable.

It is an object of the present invention to provide a vehicle panel which can achieve more appropriate impact absorption over a wider range of impact load angular presentations.

In accordance with the present invention there is provided a vehicle panel comprising a curved member defining a concave surface between opposed edges and from that concave surface a plurality of major fin members and a multitude of subsidiary fin members extend, said major fins having a tongue configuration spaced from both opposed edges while said subsidiary fins extend from about one of said opposed edges and at least one said subsidiary fin is located between an adjacent pair of said major fins in order to facilitate an appropriate deformation response of energy absorption over an angular range of impact load presentations.

Typically, the major fins and/or subsidiary fins are arranged such that under impact load these fins are initially temporarily deformed and then upon greater impact load permanently deformed.

Normally, the major fins will be regularly spaced about the concave surface.

The major fins will normally be coupled to the concave surface substantially in a relatively flat portion of that concave surface defined as a base plane.

The subsidiary fins will normally extend from one of the opposed edges to a bottom position in the concave surface. Typically, this bottom position will be substantially in the base plane from which the major fins extend.

The at least one subsidiary fin located between the adjacent pair of said major fins is arranged to interleave with those major fins to provide an overlap of at least 5mm.

Normally, the major fins and the subsidiary fins will be integral with the curved member defined in the concave surface.

An embodiment of the present invention will now be described by way of example only and with reference to the accompanying drawing in which:-
Figure 1 is a pictorial plan view of a vehicle panel;
Figure 2 is a pictorial cross-section of the vehicle panel depicted in Figure 1; and
Figure 3 is a pictorial cross-section illustrative of the vehicle panel depicted in Figures 1 and 2 within a vehicle.

In the drawing, a vehicle panel 1 comprises a curved member 2 which defines a concave surface 3 from which a plurality of major fins 4 and subsidiary fins 5 extend. Typically, within a vehicle, the vehicle panel will be located within an aperture defined by respective vehicle structural components 6, 7 and with an underlying structural support or frame 8. This structural frame 8 is generally hard and made from metal and is therefore potentially dangerous in contact with an occupant during an impact. Thus, the purpose of the fins 4, 5 is to absorb all or at least a significant proportion of the impact energy imposed by the occupant during such a collision.

Clearly, a combination of fins 4, 5 deformation along with inherent deformation of the curved member 2 is utilised to absorb impact energy.

In accordance with the present invention the major fins 4 and subsidiary fins 5 act in concert to ensure impact energy is absorbed over a wide range of angular presentations. It will be appreciated previously fins were provided which extended from one edge of the curved member 2 towards an opposed edge and possibly as illustrated in United States Patent 5,709,407 (Chrysler Corporation). These fins may be spaced from that opposed edge such that under an impact load the fins deform in order to absorb impact energy. Such an arrangement is particularly suitable for impact load applied perpendicularly to the vehicle panel. Normally, the fins in such prior energy absorbing vehicle panels were arranged to remain in contact with the underlying support frame such that deformation of the fins occurs immediately upon impact load. Unfortunately, a consequence of having fins which extend from one edge of the vehicle panel is that at more acute angles the presence of the fins in effect reinforces the panel creating a stiffer deformation response to impact loads. This variation in impact load response or energy absorption requires designers of motor vehicles to take care to achieve acceptable responses and thus make compromises which may inhibit design choice.

In the present invention the major fins 4 and subsidiary fins 5 act in concert. The major fins 4 take the form of tongues configured to extend from the curved surface 3. These major fins 4 have a gap either side to the respective opposed edges 9, 10 of the curved member 2. Thus, the major fins 4 are not tied at one side and thus can deflect more readily about the line of impact. Interleaved with the major fins 4 are the subsidiary fins 5. These fins 5 are of a typically narrower width than the major fins 4 and extend from one of the opposed edges 9 inwards of the curved surface 3. It will be appreciated, that these subsidiary fins 5 thus are constrained along one side and so are less susceptible to deformation under impact load. Normally, at least the subsidiary fins 5 will have a well rounded edge 11 in order to achieve the best engagement with the underlying support frame 8 for impact absorption.

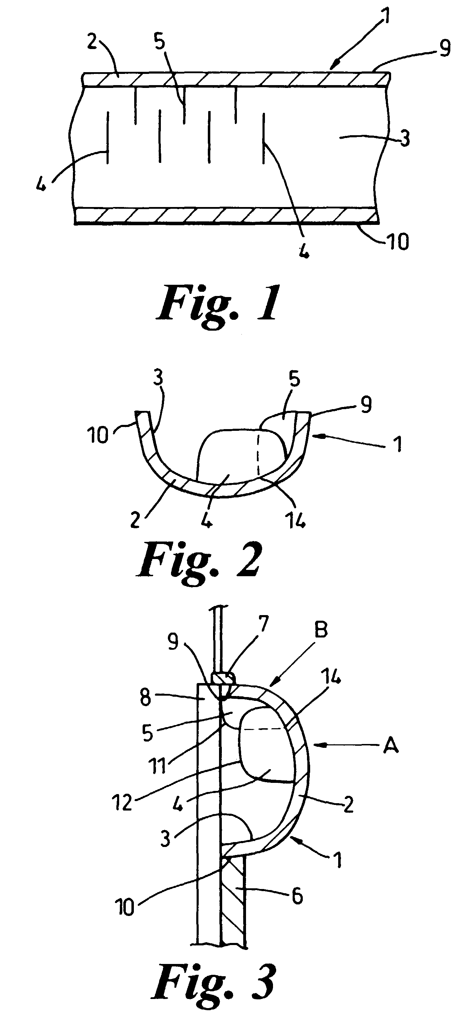

Through configuration of the major fins 4 and subsidiary fins 5 to act in concert as described above, the panel 1 is allowed to appropriately accommodate a wider range of angular presentations of impact load for acceptable energy absorption in comparison with previous vehicle panels. Thus, for a substantially perpendicular presentation of an impact load indicated by arrowhead 'A' in Figure 3, it will be understood that the curved member 2 will substantially bow about the point of contact between the impact load and the member 2 until the major fins 4 engage the structural frame 8 whereupon these fins will deform to absorb impact energy. Again, the major fins 4 will typically have a well rounded edge 12 such that ,as the bowing of the curved member 2 progresses, this edge 12 comes into engagement with the underlying support member 8 such that it rolls upon further bowing of the member 2 and collapses to absorb impact energy. With such an axial and perpendicular presentation of the impact load (arrowhead 'A') it will be appreciated that the reinforcing effect of the subsidiary fins 5 due to their tying with an opposed edge 9 has limited effect upon the bow progression of the curved member 2 under impact load. In such circumstances, the major fins 4 can thereby absorb significant proportions of impact energy prior to violent engagement between that impact load i.e. occupant and the underlying structural member 8.

Unfortunately, within a motor vehicle it will be appreciated that impact loads presented by the occupant may not be perpendicular as depicted by Figure 3 in the direction of arrow head 'A'. Thus, impact loads may be presented to the vehicle panel 1 either initially or after whiplash rebound in a direction depicted by arrow head 'B'. In such circumstances, an impact load presented in the direction of arrow head 'B' will be absorbed by deformation of the subsidiary fins 5 in association with the major fins 4 and the curved member 2. The subsidiary fins 5 have a rounded edge 11 to operate in a similar fashion to the rounded edge 12 such that there is a degree of roll of the edge 11 about the structural member 8 along with deformation under impact load in the direction of arrow head 'B'. As the subsidiary fins 5 only extend to a limited extent into the concave surface 3, the reinforcing effect as described previously is limited and so deformation collapse of the fins 5 in order to absorb such impact energy is readily achieved. Clearly, the major fins 5 will eventually contact the structural member 8 under severe deformations of the curved member 2 and thus again through slide, roll and major fin 4 deformation absorbed impact energy.

It is necessary to provide both major fins 4 and subsidiary fins 5 within the vehicle panel 1 in order to achieve the necessary wide range of acceptable angular presentations of the impact load. It will be understood that major fins 4 alone would be relatively easily deformed with regard to angular presentations of impact loads indicated by arrow head 'B' whilst provision of subsidiary fins 5 only about either opposed edges 9, 10 would similarly be susceptible to easy deformation under perpendicular impact loads indicated by arrow head 'A'. Clearly, easy deformation of the vehicle panel will generally provide unacceptable energy absorption for deformation depth in order to appropriately protect an occupant during an impact collision.

It will be noted from the drawings that a space or gap is provided in normal use between the major fins 4 and the structural member 8. This space or gap is preferred in order to ensure that the curved member 2 has deformed prior to the engagement between these fins 4 and the member 8 such that some impact energy absorption is achieved simply through the curved nature of the member 2 deforming under load. It will also be appreciated that provision of such a spacing or gap facilitates rolling about the edges 11, 12 under such impact deformation.

Those skilled in the art will appreciate that major fins 4 could be arranged to extend from the concave surface 3 at central or base portions of that surface 3 whilst respective subsidiary fins 5 could be provided either as illustrated only on one side of the opposed edges 9, 10 or both sides in order to provide for a wide range of acceptable angular presentations of impact loads for appropriate energy absorption. In any event, the subsidiary fins 5 will only extend to a limited degree into the curved surface 3 such that the vehicle panel 1 is not overly reinforced by such subsidiary fins.

Normally, the vehicle panel 1 will be made from a plastics material possibly covered on its viewed surface by a fabric for aesthetic purposes. Thus, the fins 4, 5 will be integral with the curved member 2 and formed during a moulding process. An example of a suitable plastic would be Polycarbonate / Acrilonitrile-Butadiene-Styrene (PC/ABS) but polypropylene could be used.

As indicated above typically the major fins4 and subsidiary fins 5 will be interleaved. Thus, normally the major fins 4 will be substantially evenly distributed and spaced through the curved member 2 with, where appropriate, subsidiary fins 5 located between adjacent pairs of major fins 4. Clearly, the actual positioning of the subsidiary fins 5 can be determined by actual curved member 2 shaping. It will be understood that normally vehicle panels will be individually shaped for a particular aesthetic design within a motor vehicle and thus not be geometrically symmetrical or standard. In such circumstances, the specific positioning of the subsidiary fins 5 between adjacent pairs of major fins 4 may be tuned in order to achieve the most desired deformation response in view of expected impact load angular presentation and/or inherent sectional variation in vehicle panel stiffness as a result of shape for accommodation within the desired motor vehicle.. It will also be understood that more than one subsidiary fin 5 may be located between an adjacent pair of major fins 4 and also these major fins 4 or, more specifically, pairs of adjacent fins 4 may not be equally spaced through the vehicle panel 1. Normally, the major fins 4 and subsidiary fins 5 will be interleaved to provide an overlap in a longitudinal direction of at least 5mm. Furthermore, the fins 4,5 could have a thickness of about 0.8mm, a height of 15-20mm and a slight inclusion angle of 2 degree to facilitate moulding etc. However, it will be appreciated that the actual fin dimensions and distribution will be determined by the specific panel within which the fins will be incorporated so a flatter panel may have fins of lower height but closer together whilst a more curved panel may have longer fins more widely spaced.

It will be appreciated the curved surface 3 defines portions that are relatively flat and thus the major fins 4 may be incorporated into that surface 3 such that the junction between these fins 4 and the surface 3 is substantially within the same plane, give or take a few millimetres. This relatively flat portion or plane may be defined as a base plane and it will be understood that such a flat coupling between the curved surface 3 and the major fins 4 facilitates hinging about that junction under impact load in order to precipitate deformation and therefore energy absorption.

The subsidiary fins 5 as indicated above are substantially secured about an opposed edge 9 of the curved member 2. Thus, the subsidiary fins 5 extend from that edge 9 through to a bottom position 14. This bottom position 14 may be substantially in the base plane as defined with regard to the major fins 4 above. In such circumstances, a point of intersection between these fins 4, 5 is presented at this bottom position in order to facilitate better concerted operation for deformation under impact load presented to the vehicle panel 1.

It will be appreciated, that the fins 4, 5 along with the curved member 2 may be made from material such that it is subjected to initial temporary deformation under impact load but upon application of greater load, or an impact load for a prolonged period of time, there is permanent deformation of the fins 4, 5 and the curved member 2. In such circumstances, temporary knocking as a result of normal operation of the motor vehicle will not create damaging dents within the panel 1 whilst appropriate occupant protection will be achieved when required.

The major fins 4 and subsidiary fins 5 in accordance with the present invention act in concert to ensure that there is no significant panel reinforcement variation during impact and to ensure the fins 4,5 are appropriately presented for energy absorption for occupant protection. Thus, the respective fins 4,5 allow control of panel 1 deformation in terms of bend, roll and rotation.

## Claims

1. A vehicle panel comprising a curved member (2) defining a concave surface (3) between opposed edges and from that concave surface a plurality of major fin members (4) and a multitude of subsidiary fin members (5) extend, said major fins having a tongue configuration spaced from both opposed edges while said subsidiary fins extend from about one of said opposed edges and at least one of said subsidiary fins is located between an adjacent pair of said major fins in order to facilitate an appropriate deformation response for energy absorption over an angular range of impact load presentations.

2. A panel according to Claim 1, characterised in that the major fins (4) and/or subsidiary fins (5) are subject to an initial temporary deformation and subsequent permanent deformation under progressive impact load presentation to the panel.

3. A panel according to either Claim 1 or Claim 2, characterised in that the major fins (4) are regularly spaced through the panel.

4. A panel according to any previous claim, characterised in that the major fins (4) are coupled to the concave surface (3) substantially in a base plane in order to facilitate hinging thereabouts under impact load.

5. A vehicle panel according to any preceding claim, characterised in that the subsidiary fins (5) extend from the opposed edge to a bottom position.

6. A panel according to Claim 5 when dependant upon Claim 4, characterised in that the bottom position is substantially in the base plane.

7. A panel according to any preceding claim, characterised in that the major fins (4) and subsidiary fins (5) are interleaved and have an overlap therebetween of at least 5mm.

8. A panel according to any preceding claim characterised in that the curved member (2) is made from a plastics material and the major fins (4) and subsidiary fins (5) are substantially integral with the curved member.

9. A panel as claimed with any preceding claim characterised in that the major fins (4) are arranged to lie below a plane defined by the opposed edges (9,10) such that these major fins (4) in use must move into engagement with a structural member (8) before deformation as a result of impact load presentation to the vehicle panel.

10. A motor vehicle including a vehicle panel according to any preceding claim.
